# EUROPEAN PATENT SPECIFICATION

(11) **EP 1 736 113 B1**
(45) Date of publication and mention of the grant of the patent: **05.08.2009**
(21) Application number: 05012015.3
(22) Date of filing: 03.06.2005
(51) Int. Cl.: A61C 5/06

(54) **Dental material processing system and communication method**
Dentalmaterialverarbeitungssystem und Kommunikationsverfahren
Système de traitement de matériau dentaire et méthode de communication

(43) Date of publication of application: 27.12.2006
(73) Proprietor: 3M Innovative Properties Company, St. Paul MN 55133-3427 (US)
(72) Inventor: Harre, Manfred, 86899 Landsberg am Lech (DE); Müller, Dirk, 80689 München (DE); Müller, Thomas, 81479 München (DE); Keller, Michael, 82131 Gauting (DE); Gramann, Dr. Jens, 81241 München (DE); Wagner, Ingo, 82237 Wörthsee (DE)
(74) Representative: Vossius & Partner

(56) References cited:
- EP-A- 0 574 757
- DE-A1- 19 951 504
- US-A1- 2001 023 056
- US-A1- 2002 086 264
- US-A1- 2004 136 328
- US-B2- 6 500 001

## Description

### Technical field

The present invention relates to the processing (including the mixing of material(s) in a container or the dispensing of material(s) from a container) of dental material(s). In particular, the present invention relates to a system comprising a dental material processing device and at least one information device, and a method of communication between a dental material processing device and at least one separate information device.

### Background of the invention

Devices for dispensing flowable substances for dental purposes are known in the art. For example, EP-A-0 492 413 provides a shell-shaped receptacle for receiving two cartridges in parallel, each cartridge having, at its rear end, a dispensing piston and, at its front end, an opening to be coupled to a rear entry opening of a mixer provided on the device. During dispensing, both pistons are synchronously advanced by an electrical motor which also drives a rotor within the mixer.

When dispensing a flowable substance from a container by way of a motor-driven dispensing device, for ensuring that the container is properly inserted into the device, and that the substance is still usable and/or that the dispensing speed is selected in accordance with the viscosity or other properties of the substance, US-A-6 631 829 suggests providing a container with data which may be stored in a transponder provided at a front container cap. When the container is properly inserted into the dispensing device, the transponder cooperates with a sensor disposed in an end wall of the device for enabling and/or controlling the dispensing mechanism on the basis of the transponder data detected. That data can include information that identifies the type of material being dispensed.

US-A-6 500 001 describes a device for dispensing multi-component compounds, in particular for dental purposes. It is equipped with a timer mounted in the device for indicating one or more times which are relevant to the working of the compound. This timer can be triggered by the start and/or the end of the running of the device.

US2002/0086264 A1 discloses a dental filling instrument for injecting a dental filler which comprises a heater for heating and thereby softening the dental filler. The dental filling instrument may be connected to a main box. It is suggested that the main box has a console which allows setting of, for example, the filler injecting conditions including filler extruding amount and speed and the heating conditions including filler heating temperature and heating time.

US2004/136328 A1 discloses a dental apparatus and process for the transmission of dental data by a transmitter and a receiver in a wireless manner. The process data come from dental apparatuses like, for example, firing kilns, wax melting apparatuses, composite photocuring apparatuses, electroplating apparatuses, steam jets, sterilization equipment, casting apparatuses, pre-heating ovens, thorough firing kilns, pressing ovens, or CAD/CAM milling apparatuses. The process data is sent to a receiver which allows the data to be displayed on a display.

US 2001/002305611 discloses a dental device intended for performing a dental process. The dental process is performed with a program control that is attached to a pages The pages is activatcable near the end of the process or directly upon conclusion of the process so that a user of the device can be made aware of the end of the dental device process.

### Summary and Detailed Description of the invention

The present invention is specified by the claims.

The present invention provides a system comprising a dental material processing device and at least one information device, and a method of communication between a dental material processing device for processing dental material(s) and at least one separate information device.

### Dental Material Processing Device

According to a first aspect of the present invention, a system is provided that comprises a dental material processing device for processing dental material(s), such as mixing dental materials in a container or dispensing dental material(s) from a container. The dental material processing device comprises a transmitter for communication with at least one information device that is separate from said dental material processing device and from said container. Preferably, the information device is independent from said dental material processing device and the container.

The term "dental material processing device" in accordance with the present invention is broadly understood as a device which can process (mix, handle, extrude, co-extrude, heat, cool, and/or dispense, for example) dental material(s). Thus, the term "dental material processing device" according to the present invention encompasses dispensers, mixers, and the like, including the PentaMix™ system, the CapMix™ system, or the RotoMix™ system, all available from 3M ESPE AG, Seefeld, Germany, and other existing or future processing devices.

The term "information device" in accordance with the present invention means a device that can provide information to or exchange information with both the dental material processing device and a user. Information provided to a user typically encompasses any visual and/or aural information based on specific characteristics or data of the material to be processed, or based on general characteristics or data as to a class of materials. The information device is a component of the system used for dental material processing with which the user is informed about details of the process and/or about details of the material (such as expiration date, date it was last used, etc.).

The term "separable" in accordance with the present invention means that the information device can be physically separated from the dental material processing device. A separable information device can also be carried on or affixed to the dental material processing device, for example for activating or storing the information device.

The term "independent" in accordance with certain embodiments of the present invention means that the information device is functionally independent from the dental material processing device and from the container(s) of dental material(s). The information device according to the present invention can thus co-operate with a plurality of different dental material processing devices, such as, for example, a mixer or a dispenser, as desired by the user, wherein the dental material processing device is adapted to communicate with an information device. Thus, the user is provided with several options as regards the use of the information device. If desired, however, the independence of the information device can be deactivated or disabled or at least restricted so that a given information device is operable with only one or a limited number of dental material processing devices.

The term "container" in accordance with the present invention encompasses any receptacle in which material is held or carried such as containers for receiving a single material only, cartridges for receiving multiple materials or substances, mixing capsules, and the like.

Thus, the present invention provides in accordance with its first aspect a system comprising an improved dental material processing device such as a dispensing device for dispensing a mixture of two components for dental applications (like the PentaMix™ system), or as a mixer for mixing two or more components in a mixing capsule (like the RotoMix™ rotational/centrifugal capsule mixer).

The dental material processing device is adapted for communication with an information device that is also in accordance with the present invention. The information device is separate from the dental material processing device so that it can be moved away from the dental material processing device and carried by a user of the dental material processing device during the process, as described above. For example, in case a dispensing device is considered, the user can dispense a desired amount of material(s) from the dispenser, for example on a tray, and can take the information device along with the dispensed material to the location were the dispensed material is needed, for example at the chair of a patient. Therefore, the separability of the information device provides flexibility for the user because the dental material processing device need not be placed at or close to the location where the dental material is used.

A dispensing device is typically an automatic dispensing system that includes a motor-driven mixing unit and reusable and interchangeable cartridges (e.g., the cartridge for the polyether impression material Impregum™ Penta™ H DuoSoft, or the cartridge for the polyether impression material Permadyne™ Penta™, or the cartridge for the vinyl polysiloxane impression material Express™ Penta™ H, all available from 3M ESPE AG). Each of these two cylindrical compartments accommodate a disposable foil bag pre-filled with the respective component. One compartment typically accommodates the foil bag with a base paste, and the other compartment accommodates the foil bag with a catalyst paste. The mixing unit comprises a chamber for holding the cartridge and two parallel motor-driven plungers designed to plunge into the respective compartments and to exert pressure on the components contained in the foil bags. The components are thereby extruded and typically mixed together before exiting an orifice, where the mixed material may be collected and used.

Mixing capsules which are filled with the components in separate chambers by the manufacturer are also used to produce mixtures of two or more components. The components are brought together and mixed with one another by the user, for example by destroying a wall separating the two chambers. With mixing capsules for the production of dental materials which are often mixed from a pulverulent component and a liquid component, the mixing procedure usually takes place in a shaker unit or mixer. The completely mixed substance is then dispensed directly onto the working area, for example into a tooth cavity, through a dispensing spout, for example formed on the mixing capsule.

Many dental procedures depend on time, for example working and setting time of a dental material to be used. In general, the user (for example the dentist or dental technician) needs to know something about a relevant time period associated with the material used. For example, once the mixed material is dispensed from a dispenser, the dentist has to use the material (for example to make an impression of the patient's teeth) within the specific working time for the particular mixture. If the material is not used soon enough, it will begin to cure before it is placed in the patient's mouth. Thereafter, a setting time is monitored in order to know the time when the tray with the solidified material can be removed from the patient's mouth. If the material is removed too soon, the material may not have solidified sufficiently and the mold will be inaccurate, and if the material is left for too long, the patient is made unnecessarily uncomfortable.

Such time information is provided to the user by the information device. Since the information device is separate from the dental material processing device, it is possible to provide the user with relevant information at any desired place, and in particular at the place where the dental material is needed and used by the dentist, and not only at the place where the dental material processing device is located. The at least one information device is thus portable. The relevant information associated with the dental material(s) is transmitted from the dental material processing device to the information device with a.transmitter or transceiver. The transmitter is for example a wireless transmitter, i.e. there is no hard-wired communication link between the dental material processing device and the information device. A wired communication link is however also encompassed by the present invention, although wireless is preferred.

The information associated with the dental material(s) is, according to a first alternative, stored on a data carrier that is associated with the container(s) containing the dental material(s). Some information about the dental material(s) could as well be contained in a memory or database on the dental material processing device or on the information device, or manually input by a user, etc. Such information is for example information concerning the properties of one or more materials held within the container, its durability, the producer, and other data. For example, the container may be a foil bag containing a base paste or a catalyst, or may be a cartridge already containing one or more such foil bags. The data carrier is preferably attached to the container or foil bags or cartridge. Alternatively, the data carrier is a separate item, for example a smartcard or the like, that is delivered together with the container (and thus associated with the container).The information associated with the dental material(s) may be provided at the dental material processing device, for example stored in a memory, and retrievable by the user. For example, the dental material processing device may comprise a database storing such information for a variety of dental materials. It is then also possible to use with the dental material processing device according to the present invention containers, cartridges, or capsules that do not carry a data carrier. The user can select the material from among those shown on a user interface of the dental material processing device (e.g., a display) that reflects which materials are listed in the database, or can enter information into the device to identify the materials. The relevant information associated with the material selected can be transmitted to the information device. According to a third alternative, the container includes a data carrier which includes only an identification code or number and the dental material processing device uses that identification number to look up in a database all necessary information. Such database can be updated, for example using a smartcard containing updated information, or by a cartridge containing dental material (which would include data indicating that one or more entries in a database are to be overwritten with updated information provided by that cartridge), or via a data link connecting the dental material processing device with a remote computer, for example.

Furthermore, the information device is preferably independent from the dental material processing device in terms of its function, as discussed above. Thus, a single information device is usable with a plurality of dental material processing devices that provide for communication (i.e. data or information transmission) from the dental material processing device to the information device. A single information device is for example usable with a dental dispensing device so that the user is provided with information about working and setting time of a dispensed material. The same information device is also usable with a mixer, for example, so that the user is provided with information associated with the mixing process such as remaining mixing time of the components contained in the mixing capsule. Such independency is preferably deactivatable or at least restrictable, as discussed above.

The information device of the present invention is adapted for conveying visual and/or aural information to the user of the dental material processing device in order to communicate the information associated with the processed material, the processor itself, or other information to the user. This will be described in more detail below.

The dental material processing device according to the present invention preferably comprises a receiver for receiving signals from said information device, in addition to the transmitter already mentioned above. Alternatively, the dental material processing device comprises a single unit, (i.e. a transceiver) instead of a separate transmitter and a separate receiver. In this embodiment of the present invention, bi-directional communication between the information device and the dental material processing device is provided. The transmitter and/or the receiver and/or transceiver are preferably radio frequency or infrared transmitter/receiver/transceiver. In case radio frequency is used, the frequencies of approximately 433 MHz, or approximately 868 MHz, or approximately 2.46 GHz are preferred. For example, a transceiver #MC13191 currently available from Freescale Semiconductor, Inc. (www. Freescale.com), or #CC2420 from Chipcon AS (www.chipcon.com) may be used. It is preferred that the communication range is up to about 5m, more preferably up to about 20 m, and most preferably up to about 50 m, and in some embodiments the range may be adjustable to permit or prevent signal transmission over relatively long distances.

As mentioned above, the dental material processing device preferably comprises a memory unit or database for storing information associated with said dental material(s). Alternatively or even in addition, the memory unit stores information associated with said at least one information device, for example the identification number of one or all of the information devices currently used with this dental material processing device, and the materials currently processed and monitored with each information device. Thus, information associated with dental material(s), once obtained from the data carrier associated with the container, is first stored in the memory unit of the dental material processing device. Preferably, the dental material processing device automatically retrieves the material information from the container (or cartridge or capsule) once the container is placed in the dental material processing device or once the dental material processing device is switched on. The information can then be transmitted to the information device at any time desired by the user. Alternatively, the information obtained from the data carrier is directly transmitted to the information device through the dental material processing device without the intermediate step of storing it in the memory unit of the dental material processing device. Preferably, the data carrier associated with the container is repeatedly checked by the dental material processing device, for example every second, using a reader (which will be described on more detail below). Larger time intervals (for example 10 seconds) are also encompassed by the present invention. As soon as a change of the container takes place and this is detected by the reader of the dental material processing device, the status change is registered by the dental material processing device and different information can be sent to the information device as appropriate.

The memory unit of the dental material processing device preferably also stores information associated with the at least one information device such as an individual identification or information about the material for which the information device is currently used. If a plurality of information devices is used with one dental material processing device, the memory unit preferably stores information about all information devices, such as their individual identities.

The container of the dental material(s) preferably comprises a data carrier, as mentioned above, such as an RFID tag, a magnetic code, or an optically readable bar code. Preferably, the receiver of the dental material processing device is also adapted for reading such data carrier associated with the container (in the following referred to as a container data carrier). Alternatively, and even more preferred, the dental material processing device comprises a separate reader such as an RFID tag reader, magnetic or optical code reader or the like.

According to a further embodiment, the receiver of the dental material processing device is further adapted for reading a data carrier provided at the information device. The data carrier in the information device is preferably an RFID tag, a magnetic code, or an optically readable bar code. Alternatively, the dental material processing device comprises a reader for reading the information device data carrier. Preferably, the same reader is adapted to read the container data carrier as well as the information device data carrier, to reduce complexity and cost. Alternatively, two readers are provided, i.e., a first reader for reading the container data carrier and a second reader for reading the information device data carrier. The information device data carrier contains, for example, the ID number of the particular information device. Again, the ID number of the information device is useful if a plurality of information devices is concurrently used with a single dental material processing device.

For example, the container data carrier reader is provided at the dental material processing device at a location adjacent to the container data carrier once the container is placed in the processing device. The information device data carrier reader is preferably provided at the dental material processing device at a location where the information device is placed for activation.

Preferably, the reader of the dental material processing device for reading the data carrier on the container and/or on the information device is a contactless reader, meaning that the data carrier does not need to contact a reader for the reader to obtain information, and furthermore does not require line of sight, meaning that there does not need to be a clear optical pathway between the reader and the data carrier for the reader to obtain information. For example, a Bluetooth reader or a reader according to ZIGPEE is used. It is preferred to use a RFID tag reader having an interrogation frequency of approximately 13.65 MHz.

As mentioned above, the dental material processing device is preferably a dispenser for dispensing a material or a mixture of materials. It comprises a housing that is adapted to accommodate the cartridge. Preferably, a mixing tip is attachable to the container and projects from the housing. The dental material processing device further preferably comprises a motor controller for controlling the motor which drives the pistons for dispensing the material from the cartridge, and an application controller which controls data exchange between the dental material processing device and the information device(s) and optionally the cartridges. A transmitter/receiver or transceiver microcontroller, for example of a RF transceiver, is connected to the application controller via serial bus. An antenna is connected to the transmitter microcontroller. Furthermore, a reader module (for example RFID reader module) is connected to the application controller, also via serial bus. An antenna is connected to the reader module. In other words, the dental material processing device preferably comprises two readers, one for reading information from the container and one for reading the information device ID, and a transceiver for dental material data exchange between the dental material processing device and the information device.

### Communication Method

According to a second aspect of the present invention, a method of communication between a dental material processing device for processing dental material(s) and at least one separate information device is provided. It should be noted that steps or signals described with reference to the invention as separate could be combined, or if described as combined could be separated.

To initiate a data transmission between the dental material processing device and an information device, the dental material processing device preferably continuously or repeatedly sends an interrogation signal in order to detect the presence of an information device. In other words, the dental material processing device first locates an available information device. If the user wants to use the dental material processing device, e.g., to dispense or mix material, and uses an information device according to the present invention, an available or free information device is preferably brought in (physical) contact with the dental material processing device, for example placed on the dental material processing device, or is brought within a predetermined distance (for example 20 mm) of the dental material processing device. The distance is predetermined by the interrogation components that are used. For example, in case an RFID tag reader operating at 13.65 MHz as mentioned above is used, the predetermined distance is approximately 20 mm. If the interrogator is positioned within the device so that it is approximately 20 mm from a designated outside surface of the device, then an information device would be interrogated approximately when it touches that outside surface. Of course actual physical contact between the information device and the processing device is not required, but it may be preferred.

When the information device has been brought within range of the interrogator, the information device is then detectable and detected by the dental material processing device due to the response of the information device to an interrogation signal. At least the ID number of the information device is then preferably read by the dental material processing device. The information device is logged in at the dental material processing device. Such log in procedure takes less than 2 seconds, for example. The preferred range of the interrogation signal is such that an information device is only detectable if it is within a predetermined distance of the dental material processing device (for example placed on the housing of the dental material processing device as noted above). This excludes that every information device is detected irrespective of its location in the room or distance from the dental material processing device. Only one information device is preferably detected or detectable that is within the range of the reader of the dental material processing device.

As an alternative to sending interrogation signals, the information device is brought in (physical) contact with the dental material processing device, or is brought within said predetermined distance, and the user then initiates the log in procedure by pressing a respective button at the dental material processing device or the information device, such as an actual button or a button displayed on a touch-panel display. The log-in sequence may then commence.

In the alternative or even in addition, the information device(s) selected by the user can be adapted to search for any available processing device. That is, in order to initiate a data transmission between the dental material processing device and an information device, the information device preferably continuously or repeatedly sends an interrogation signal in order to detect the presence of an available dental material processing device. The interrogation signal could be made progressively stronger if no information device is detected, so that an increasingly large range is covered until an information device is detected.

The method of communication between a dental material processing device and an information device according to the present invention starts out from a situation where an information device is already registered at the dental material processing device.

Accordingly, the dental material processing device transmits an information signal identifying the at least one information device to be contacted for activating the at least one information device. Preferably, the information signal also identifies the dental material processing device to inform the information device which dental material processing device is currently contacting the information device. Next, the dental material processing device further transmits specific data associated with the dental material(s) to the at least one information device.

With the information (or activation) signal transmitted from the dental material processing device to the information device, the specific information device identified by the transmitted information device ID is typically informed that the dental material processing device transmitting the information signal intends to transmit specific data relating to a specific process (dispensing, mixing, or the like) and particularly relating to the specific materials involved in this process. This information (or activation) signal is followed by the transmission of the actual specific data associated with the dental material(s) to be processed.

The transmission of the information signal addressing and identifying a specific information device is particularly of interest if one dental material processing device may be used with a plurality of information devices. For example, at a dentist's laboratory, there may be a single dispensing device that is used by several dentists or assistants for preparing dental impression trays for several patients using the same or different impression materials. Each dentist or assistant dispenses the required amount of mixture from the same dispenser. Therefore, once a fresh amount of mixture is dispensed, the necessary information like working time or setting time of the specific material being dispensed needs only be transmitted to the particular information device that is used by the user for this specific dispensing process. All other information devices do not need to receive this information at this time. The information device can be programmed to identify itself so that a user knows which of several possible such devices corresponds to the material just processed. For example, the display of the information device could flash, or a sound could be emitted, or a light (such as an LED) could be illuminated, or any combination of these or other identifying methods.

Preferably, the at least one information device addressed by the dental material processing device sends a response signal to the dental material processing device upon receipt of the information or activation signal. The response signal for example acknowledges receipt of the information signal and indicates to the dental material processing device that the information device is ready to receive the specific process or material information. This may be referred to as a "hand-shake."

Preferably, the step of further transmitting specific data associated with the dental material(s) to the at least one information device is initiated upon receipt of the response signal at the dental material processing device.

According to a preferred embodiment, the step of transmitting specific data associated with the dental material(s) to the at least one information device is repeated after a change of the dental material(s) in the dental material processing device. If the material in the dental material processing device is changed (for example, if it is desired to dispense or mix different materials from the same dental material processing device for the same patient), this is communicated to the information device to provide the information device with the new material data or process parameters, such as working time or setting time being associated with the new material(s). That is, the communication link between the dental material processing device and the information device currently logged in at the dental material processing device is maintained after the first data transmission, and the information device is then supplied with the new material data when the step of transmitting specific data is repeated. The data associated with the dental material(s) includes at least one of: working time of the material(s), setting time of the material(s).

According to a preferred embodiment, communication between the dental material processing device and a detected information device is maintained until a new information device is detected by the dental material processing device. In other words, the established communication link between the dental material processing device and an information device is maintained after the information device is removed or taken away from the dental material processing device to the place where the user applies the material. This is advantageous in case the container or cartridge of the dental material processing device is changed, for example in case another material needs to be dispensed for the same patient. The new material information is then transmitted to the specific information device that is "logged in" to the dental material processing device. Preferably, this data transmission is initiated automatically after change of the material. The information device currently logged in is preferably only logged out when a further information device is logged in by bringing it within a predetermined distance of the dental material processing device, as described above. Alternatively, the dental material processing device and/or the information device comprise a "log in" button that can be pressed by the user and/or a "log off" or "reset" button to log off the currently logged-in information device or to even reset the device completely. In other words, communication between the dental material processing device and a detected information device is maintained until a new information device is initiated in its place. Moreover, it is preferred that an information device logged in at a first dental material processing device cannot be logged in to another dental material processing device during the current process monitored by this information device.

In order to maintain the communication link between the dental material processing device and the information device, RF transmission is preferably used as described above because it does not require line of sight, meaning that there does not need to be a clear optical pathway between the dental material processing device and the information device to transmit information.

Preferably, the information device repeatedly sends a confirmation signal to the dental material processing device to confirm that the information device is still present and able to send and receive signals. In order to reduce power consumption of the information device, such confirmation signal is preferably sent periodically, such as once every minute.

The method of the present invention further includes the step of transmitting a command signal for initiating a timer function from the dental material processing device to the information device. The transmission of the command signal or timer signal, respectively, takes place, preferably automatically, upon dispensing dental material(s) from the dental material processing device or start of the mixing process in a mixer. In case of a dispensing process, this command signal preferably initiates a first timer function in the information device, for example with respect to the working time for the dispensed dental material. More preferably, the same or an additional command signal also initiates a second timer function in the information device, for example with respect to the setting time for the dispensed dental material. The second timer function is preferably initiated subsequent to expiry of the working time measured by the first timer function. In other words, first the working timer is started so that the user can determine the elapsed or remaining working time. Once the working time has elapsed, a second timer function is started automatically, now with regard to the setting time so that the user can also determine the elapsed or remaining setting time. As an alternative to the automatic initiation of the second timer function, after initiation of the first timer function, a command signal manually initiated by a user initiates a second timer function in the information device with respect to the setting time for the dispensed dental material. It is also encompassed that the first timer function is terminated upon receipt of the manual user command signal. Thus, the user has the possibility to stop the working time timer function (for example if the user did not need the whole working time available for the used material) and to manually start the setting time timer function.

According to background art, in case of a mixing process, the command signal initiates a first timer function in the information device with respect to the mixing time required for the dental materials to be mixed.

Preferably, the information device provides a notification signal to the user at and/or a predetermined time interval prior to expiry of the working time and/or setting time. Thus, the user is notified that the working time and/or setting time has expired or will shortly expire. In this context, it is preferable that the said second timer also counts the time lapsed after expiry of the setting time so that the user gets information about when the setting time expired (if for example the user had to leave the patient for a while).

The dental material processing device alternatively communicates with a data carrier containing updated information for the dental material processing device. In other words, in order to update material data stored in the memory unit of the dental material processing device, the dental material processing device can communicate with a data carrier, preferably being portable such as a smartcard, so that a fresh set of data is transmitted to and stored in the dental material processing device for reference in connection with future materials of a certain type or class. This is particularly helpful in case the dental material processing device is used with containers or cartridges not having an associated data carrier, as described above. This update could be done instead or in addition by an internet connection.

In the following, communication between the dental material processing device and the information device for a preferred embodiment of the present invention is explained.

After the dental material processing device has been switched on, the dental material processing device of this preferred embodiment first determines as to whether or not a data carrier or transponder, respectively, representing a dental material processing device can be detected. This is particularly useful if a dentist or dental laboratory uses several such devices. In this case, an individual name can be allocated to a particular device so that each dental material processing device gets its own name or identification in order to avoid any confusion or collision. Such name or ID is transferable to the information devices being logged in at a specific dental material processing device and is then preferably displayed at the information device. The processing device data carrier is preferably brought within a predetermined distance of the dental material processing device or even touches it (or is adhered to it) so that the name or ID carried by the data carrier can be read by the reader of the dental material processing device. If such processing device data carrier is detected, the name is read and stored in the memory of the processing device.

In the next step, it is determined whether an information device is already logged in. If no information device is logged in, or if no processing device data carrier is detected, the process continues with detecting a container transponder. On the other hand, if an information device is logged in, the processing device name is sent to the information device being logged in.

In the next step, it is determined whether a container data carrier can be detected. If no such data carrier is detected, there is either no container placed in the dental material processing device, or a container without an operational transponder is present. If, on the other hand, a container data carrier is detected, the processing device reads the data carrier which contains, for example, material data, and stores the read data in a memory. In the next step, the processing device determines whether there is an information device logged in. If so, the material data are sent to the information device.

If no container data carrier is detected, the dental material processing device determines whether there is an information device logged in. If so, the dental material processing device informs the information device that there is no container placed in the processing device or that it is a container having no data carrier, for example from a different dental material provider.

On the other hand, if there is no information device logged in, the dental material processing device determines whether an information device is detectable. In case an information device is detected, the processing device determines whether the detected information device is already logged in, i.e. it is determined whether the detected information device is the one already logged in or another one. If this particular information device is already logged in, the process proceeds to the determination whether and when the processing device has, for example, begun mixing the material(s). If this particular information device is not logged in, the information device is logged in. Next, it is determined whether the material data are already stored in the dental material processing device. If such material data are already stored, the data are sent to the information device. If not, the processing devices monitors whether mixing has begun. Furthermore, it is checked whether a device name was initially allocated to the dental material processing device. This device name is then sent to the information device.

The dental material processing device then determines whether for example the mixing of the material(s) has been initiated. It is then checked whether material data are stored in the memory. In case such material data are available, the mixing parameters are read from the memory, and the mixing process starts. On the other hand, standard mixing parameters can be used or set instead if, for example, only one type of impression material is used with a given processing device.

If the mixing process is not started in this step, the next step inquires whether the timer function has been initiated at the dental material processing device. The "start timer" request is then transmitted to the information device being logged in.

In a further step it is preferably checked whether the information device has been signed off, for example if it is intended to log it in to another dental material processing device. The information device is then logged out at the present dental material processing device.

Finally, the processing device may is check whether an update transponder is within range of an interrogator associated with the processing device. In this case, an update sub-routine is initiated. Preferably, this update sub-routine updates entries in a database that control the operation of the processing device, such as working time or setting time.

### Information Device

An information device for use in processing dental material(s) with a dental material processing device is now described. The information device comprises a receiver for receiving communications from the dental material processing device including data associated with said dental material(s) to be processed, and an indicator for indicating visual and/or aural information to the user based on said specific data.As described above, the information device is separate from the dental material processing device. More preferably, the information device is also independent from said dental material processing device, as discussed above.

Preferably, the information device comprises a microcontroller. The receiver and the indicator are connected to the microcontroller, and an antenna is connected to the receiver. In a preferred embodiment, the indicator is a display such as an LCD display. The information device may also comprise one or more buttons or switches (for example an ON/OFF-button, a LOG IN and/or LOG OFF button, and/or a RESET-button, which buttons could be virtual buttons provided on a touch-panel display) as described in more detail below. These components of the information device are preferably contained in a housing. The size of the housing is preferably such that the information device can be carried like a wrist watch or a pocket watch, or on a string or a chain around the user's neck.

Preferably, the information device comprises a transmitter (or a transceiver) so that the information device is able to send signals, for example acknowledgement signals, to the dental material processing device. As mentioned above, the information device furthermore preferably repeatedly sends a confirmation signal to the dental material processing device indicating that the information device is still available to interact with the processing device. In order to reduce power consumption of the information device, such confirmation signal is preferably sent periodically (such as every minute, although shorter or longer intervals are also encompassed) dependent on the power source of the information device. If, for example, the information device is powered with batteries having a larger capacity, shorter intervals may be used.

Futhermore, the information device comprises a timer. The timer is adapted to initiate the measurement of at least one time period in response to a command signal received from the dental material processing device, and to display elapsed time, remaining time, or both. Additionaly, the timer is adapted to be initiated by a command signal initiated by a user, for example by pressing a respective button at the information device, and/or at the dental material processing device.

The indicator of the information device preferably indicates the remaining time provided by the timer, but it could also display the elapsed time instead, or show both times simultaneously. The indicator is preferably a visual and/or aural indicator. The visual indicator may comprise a display and/or a light-emitting device. For example, in case the indicator is a display, a count-down provided by the timer is displayed. In case an LED is used as an indicator, the LED may be operated such that it preferably flashes and the flashing frequency increases as the count down comes closer to expiry of the time interval. In case of an aural indicator, a tone with increasing frequency or volume can be provided to inform the user about the passage of time. The term aural indicator also encompasses a speech generator that outputs announcements to the user such as "Remaining time: 20 seconds" or the like.

The command signal transmitted from the dental material processing device or manually input by the user preferably initiates a first timer function in the information device with respect to the working time for the dispensed material. The same or a further command signal preferably initiates a second timer function in the information device with respect to the setting time for the dispensed material. The second timer function is initiated subsequent to expiry of the working time measured by said first timer function. In other words, first the working timer is started so that the user can follow lapse of the working time. Once the working time is over, a second timer function is started, now with regard to the setting time so that the user can also follow lapse of the setting time. The remaining time provided by the timer can be displayed, but also the elapsed time instead, or both times simultaneously. As another example, the first timer function relates to the mixing time required for proper mixing of two or more components in an automatic mixer, and the second timer function relates to the working time of the mixed material. Preferably, a third timer function for the setting time is provided.

The information device is preferably adapted to provide a time expiration signal or notification. The signal is preferably a visual and/or aural signal in order to output an optical and/or acoustical notification. For example, in case the information device comprises a display, the display may start to blink, or may display a textual message like "time expired". In case an LED is present, the LED may start to blink at a certain frequency. Alternatively, in case the LED is flashing or blinking at an increasing frequency as described above, it may change to being continuously illuminated. The reverse change from continuous illumination to flashing is also encompassed by the present invention. In case an aural notification system is used, repeating sounds (including voice sounds) can be emitted by a loudspeaker.

The time lapse signal is emitted when the time period has expired. Preferably, an additional signal is once or repeatedly output after a predetermined time interval (for example 1 minute) after the first time lapse signal so that additional warning signals are communicated to the user in case the user has not recognized the first time lapse signal.

The information device further comprises a data carrier representing the unique ID number of the information device. The data carrier is preferably adapted for contactless interrogation. The information device data carrier is most preferably an RFID tag. As described above, optically or magnetically readable codes are also encompassed. However, RFID tags are preferred as their function is not impaired in case the marker is accidentally contacted by the material being dispensed or otherwise processed. The information device data carrier is preferably attached to the housing (such as by a label), or accommodated within the housing.

Thus, as described above in the context of the dental material processing device, it is preferred that the information device comprises a data carrier (the information device data carrier) carrying the ID number of the information device which is read by an appropriate reader of the dental material processing device for activating or log in of the information device at the dental material processing device. Upon log in, the material data is transmitted from the dental material processing device to the information device via the RF transmitter/receiver or transceiver.

According to a preferred embodiment, the information device further comprises a memory for storing the specific data associated with said dental material(s).

It is also encompassed that more than one information device is in communication with the dental material processing device at the same time in order to display the relevant data on two information devices. Thus, for example two information devices may be concurrently initiated, and the dental material processing device will then recognize the presence of both information devices, will log in both, and communicate with both. Once material is dispensed or mixed or the like, the user can take one information device away from the dental material processing device, and the other can stay at the dental material processing device so that additional information display is provided at the dental material processing device. Alternatively, one information device can be carried by an assistant and the other by a dentist.

In accordance with a further preferred feature, two or more information devices can communicate with each other and exchange data. For example, one information device (carried by an assistant) may send at or near the end of the setting time a signal to another information device (carried by the dentist) notifying the other information device that the patient's impression is complete. In addition or as an alternative, upon completion of the process the information device notifies to the front desk so that, for example, the patient is correctly billed for a certain procedure or for a specific material used. As an alternative, the notification of the second information device or front desk takes place via the dental material processing device in order to keep the circuitry of the information device simple.

As a further alternative, it is encompassed by the present invention that the information device is adapted to monitor more than a single patient at the same time. For example, once the amount of dispensed material is placed in a tray and the tray inserted into the patient's mouth, another process may be started for another patient. Preferably, the time periods for both patients are then displayed on the information device, or the display can be switched from one time period to the other.

According to a preferred embodiment of the present invention, the microcontroller of the information device is adapted to provide various display modes for indicating visual information to the user. Preferably, a sleeping mode is represented by a mere black screen of the display, shown for example after the information device is switched on. Upon log in of the information device at a dental material processing device, the display of the information device preferably changes from the black screen to a main display mode. In this main display mode, a main menu is displayed. In the main menu, for example, the user can select among various functions such as the functions "DENTAL MATERIALS" or "STOPWATCH". However, other functions can be envisioned like an "UPDATE" function, etc.

In the main display mode and preferably in all display modes, additional text and or symbols are displayed relating to the status of the information device (such as battery status, receipt signal strength, etc.), or relating to process steps or command terms. At the bottom line of the display, for example, icons for general functions like "sleep", "select", and/or "cursor up"/"cursor down" are provided.

Furthermore, for example at the top left corner of the display, the battery status is indicated. A further symbol indicates the quality of the received signal (the signal strength), and the display also indicates to which dental material processing device the information device is presently connected. The batteries of the information device are preferably rechargeable, and the information device may be docked with the processing device for recharging or other purposes. Docking stations of this type are well-known in other fields.

If the user selects the "STOPWATCH" function or the equivalent in the main menu, the display changes to a further display mode for the stopwatch function. In this mode, the stopwatch function can be manually initiated by the user, which may measure a time period related or unrelated to a dental material processing device.

On the other hand, if the user selects the function "DENTAL MATERIALS" or the equivalent in the main menu, the display proceeds to a different display mode. In this display mode, it is preferred that the user can select among the different materials to be processed (for example, "USER DEFINED", "Express P Putty", or "Impregnum P Duo H S", the latter two being products from 3M ESPE AG). Depending on the selection, the timer function is individually adapted (for example different working times and setting times).

If the user selects "USER DEFINED" or the equivalent, the display preferably shows initial settings, for example "3:00" (3 minutes and zero seconds) for the initial working time as well as for the setting time. The user has now preferably the option to use these initial settings or to change them. If the user then starts the process and presses the "start" icon or button on the information device, the working time countdown is initiated and the display preferably shows the remaining time. In this mode, the user can either stop the timer, or can switch to the setting time timer. In case a mixture of material is dispensed by the dental material processing device, the user may jump to the setting time counter before the working time counter expired if the user quickly applied the dispensed material to the mouth of the patient and does not need the complete working time (as already mentioned above). The display then displays the setting time timer. Here the user has preferably the option to stop the timer if for some reason he wants to interrupt the timer. On the other hand, after expiry of the setting time timer, the display will preferably display a count-up or count-down of, for example, 2:00 minutes. This information indicates to the user how much time already expired since expiry of the setting time of the material.

As an alternative to the selection of user defined material settings, stored settings related to various materials may be offered to the user. For materials to be selected from a list or database of materials, the initial working time and setting time are provided by the memory of the processing device. Upon pressing the "start" icon or button, the working time timer starts to count down from a predetermined amount of time. Again, as described above, the user can switch to the next display mode showing the setting time timer, or can stop the working time timer. Preferably, this switching or "jump" functionality is provided only if permissible dependent on the specific material to be processed. For example, a jump to the setting time timer is allowable for silicone-based materials. In this setting time mode, the user can stop the timer. If the setting time timer expires without interruption, the count-up is preferably started, as described above. The count-up can be stopped, if desired by the user.

The system or kit, respectively, according to the present invention preferably comprises a plurality of information devices so that a single dental material processing device is usable for different patients or different materials. Each information device can then be allocated to an individual patient and/or dental material.

Preferably, the dental material processing device comprises a paging function. For example, by pressing a respective button on the dental material processing device causes all information devices to emit signals so that they can easily be located. For this functionality, it is preferred that the transmitter/transceiver of the dental material processing device is operable at two levels, i.e., a low power level for normal use and a high power level with a greater range to be used for example for paging.

### Brief Description of the Drawings

The present invention will now be described with reference to the accompanying drawings, in which:
- Fig. 1: shows an example of a dental material processing device of the type being used in accordance with the present invention;
- Fig. 2: shows a preferred embodiment of an information device used in the present invention in the form of a wrist-watch;
- Fig. 3: shows a schematic of the components of a preferred system according to the present invention along with an indication of the exchanged signals;
- Fig. 4: shows various display modes of and information displayed by the information device according to a preferred embodiment of the present invention;
- Fig. 5: shows a flow diagram explaining the communication between the dental material processing device and the information device for a preferred embodiment of the present invention; and
- Fig. 6: shows a flow diagram of a mixing sub-routine for the preferred embodiment of Fig. 5.

### Detailed Description of preferred Embodiment

Although certain specific aspects of the present invention are described with reference to the Figures, other aspects may be used in place of or in addition to those aspects, as noted above.

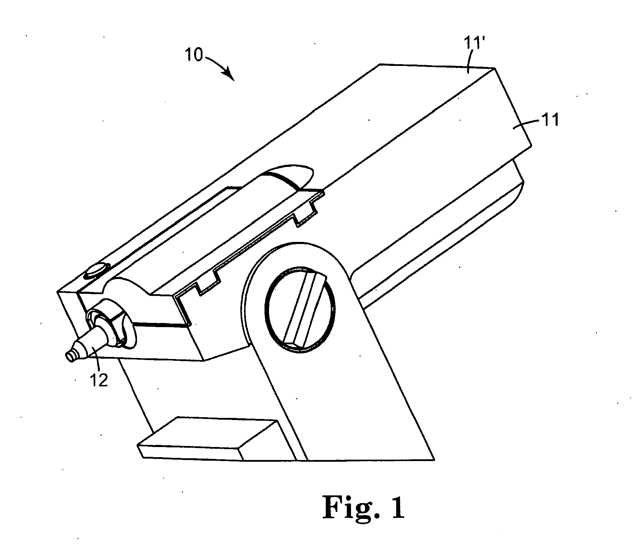

Fig. 1 shows an example of a dental material processing device of the type being used in accordance with the present invention. In the example shown in this Fig., the dental material processing device is a dispenser of the PentaMix™ type dispensers. It comprises a housing 11 that is adapted to accommodate a cartridge, for example a cartridge for two different materials to be mixed and dispensed. In Fig. 1, the cartridge is already placed in the housing 11, and only the mixing tip 12 projects from the housing 11.

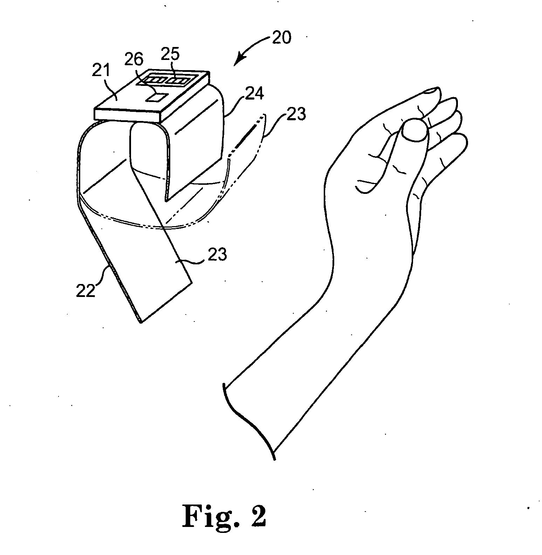

Fig. 2 shows a preferred embodiment of an information device 20 used in to the present invention in the form of a wrist-watch. The information device 20 of this embodiment comprises a housing 21 being removeably attached to a wrist band 22 having two opposite end portions 23 and 24. The two end portions 23 and 24 are connectable to each other once the information device 20 is placed on the wrist of the user. In the embodiment shown in Fig. 2, the information device 20 comprises a display 25 such as a LCD display, and a push button 26 (for example an ON/OFF-button and/or a RESET-button). The data carrier (not shown) carrying the ID number is preferably attached to the housing 21 such as a label, or accommodated within the housing 21.

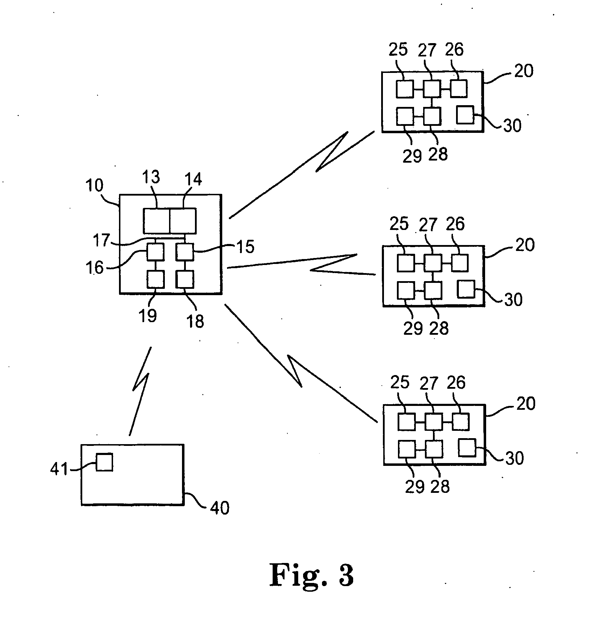

Fig. 3 shows a schematic of the components of a preferred system according to the present invention along with an indication of the exchanged signals. In the preferred embodiment shown in Fig. 3, the system comprises one dental material processing device 10 and three information devices 20. As already explained above, a plurality of information devices 20 can be used with a single dental material processing device 10, and the present invention also encompasses the combination of several dental material processing devices 10 with a plurality of information devices 20.

The dental material processing device 10 preferably comprises a motor controller 13 for controlling the motor which drives the pistons for dispensing the material from the cartridge, and an application controller 14 which controls data exchange between the dental material processing device 10 and the information device(s) and optionally the cartridges. A receiver/transmitter or transceiver microcontroller 15, for example of a RF transceiver, is connected to the application controller via serial bus 17. An antenna 18 is connected to the transmitter microcontroller. Furthermore, a reader module 16 (for example RFID reader module) is connected to the application controller, also via for example a serial bus 17. Antenna 19 is connected to the reader module 16. Although Fig. 3 shows only a single reader module 16 with antenna 19, it is preferred that the dental material processing device comprises two reader modules, one for reading the container data carrier 41, and one for reading the information device data carrier.

As shown in Fig. 3, each information device 20 preferably comprises a display 25 which is connected to a microcontroller 26. Furthermore, a receiver 28 (for example a RF receiver) and one or more push buttons 26 are connected to the microcontroller. An antenna 29 is connected to the receiver 28. The timer may either be provided as a separate component being connected to the microcontroller 26, or may be implemented in the microcontroller 26. Furthermore, an information device data carrier 30 is provided.

Finally, Fig. 3 shows a cartridge 40 comprising a data carrier 41 such as an RFID tag. Typically, the data carrier 41 is not provided at the cartridge housing but rather attached to the material containers such as foil bags mentioned above.

The RFID tag 41 provided at the cartridge 40 or at the material containers is readable by the reader module 16 with antenna 19 of the dental material processing device 10. For example, material data are read from the data carrier of the cartridge 40 or material containers, and supplied to the application controller 14. For example, the container data carrier reader 16 is provided at the dental material processing device 10 at a location being adjacent to the container data carrier 41 once the container 40 is placed in the processing device 10. The information device data carrier reader 16 is preferably provided at the dental material processing device 10 at a location where the information device 20 is placed for activating it. For example, if a dispenser as shown in Fig. 1 is considered, the information device data carrier reader is preferably located in the upper portion 11' of the housing 11. In this area, the information device 20 can then be brought within range of the reader for log in, as explained above.

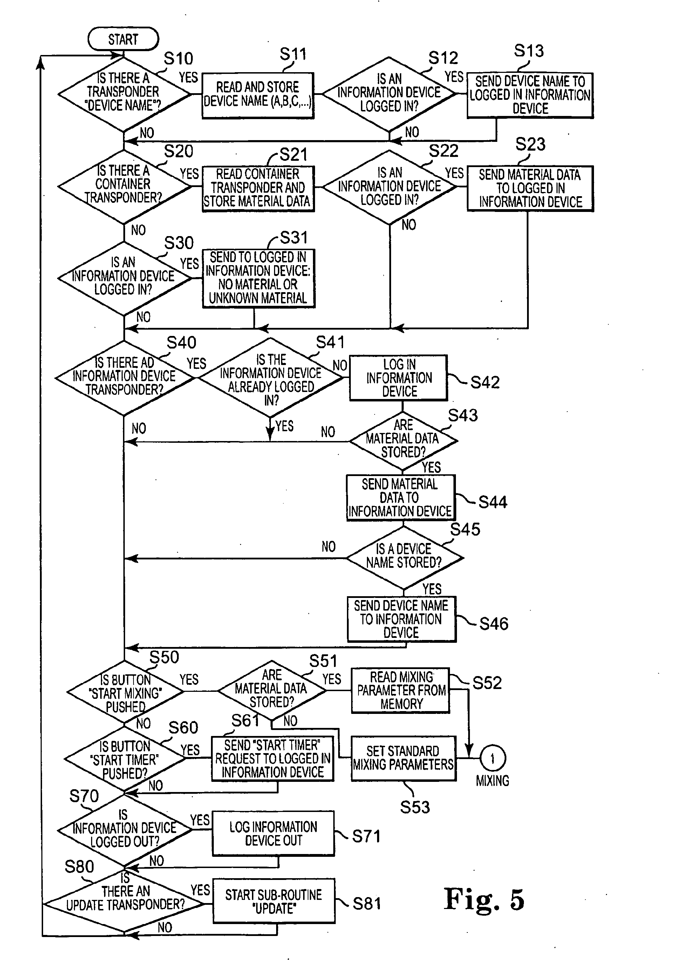

Furthermore, as also shown in Fig. 3, information relating to the materials to be processed is transmitted to the information device 20. The lines drawn in Fig. 3 are intended to show that several information devices 20 can be used with a single dental material processing device 10, but do not mean that material data are always concurrently transmitted to all information devices 20, or that at any given time any data is being transmitted at all. A more detailed explanation of the different signals transmitted back and forth is given below with reference to Fig. 5.

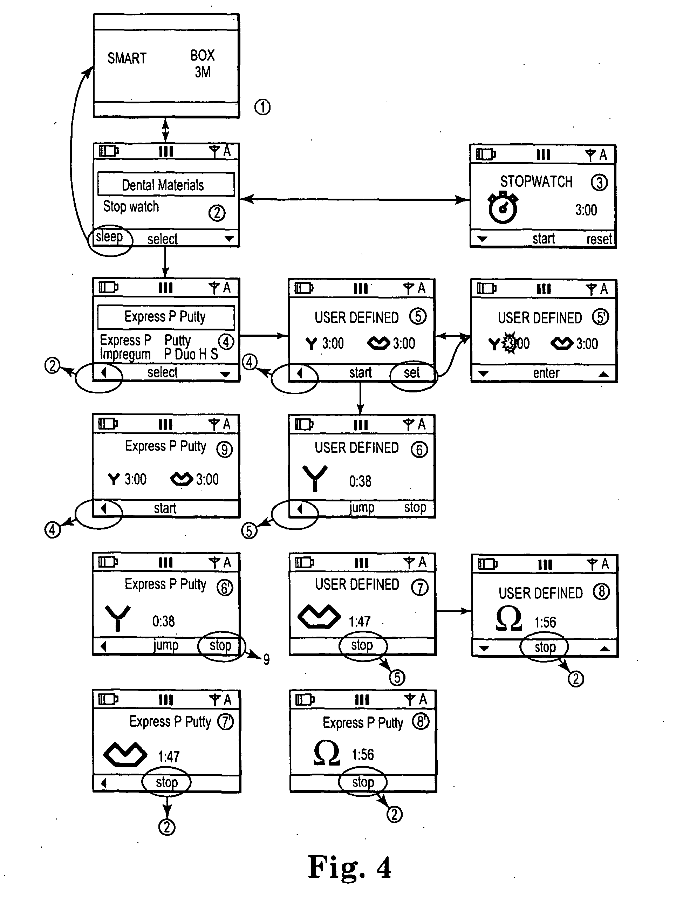

In Fig. 4, various display modes of the information device according to a preferred embodiment of the present invention are shown. The descriptions that follow are for illustrative purposes only, because innumerable variations of screen displays, command terms, process steps, signal exchange sequences, and the like can be envisioned that are also within the scope of the present invention.

The display modes shown in Fig. 4 are preferably shown on display 25 of the information device 20.

Display mode ① is a mere black screen representing a sleeping mode of the information device.

### 1. Initial signal exchanges and display functions

Upon receipt of a wake-up signal from the dental material processing device, the information device changes from the black screen to the main display mode such as display mode ②. In this main display mode, the main menu is displayed. According to the preferred embodiment explained with reference to Fig. 4, the user can select among the functions "DENTAL MATERIALS" or "STOPWATCH". However, other functions can be envisioned like an "UPDATE" function, etc.

In the main display mode and preferably in all display modes, additional text and or symbols are displayed relating to the status of the information device (such as battery status, received signal strength, etc.), or relating to process steps or command terms. At the bottom line of the display of the embodiment of Fig. 4, the functions or commands terms "sleep", "select", and "↓" are provided, for example. If the user selects "sleep" (for example by pushing the respective button or touching the respective icon on the screen (in case of a touch screen)), the display changes to display mode ①, i.e., to the sleeping mode. With the icon "select", the function being highlighted in the display can be selected (in the Fig., the function "DENTAL MATERIALS" is highlighted with a black bar). Finally, with the cursor icon "↓" it is possible to scroll down the menu.

At the top left corner of the display shown in Fig. 4, the battery status is indicated. The symbol at the center of the top line indicates the quality of the received signal (the signal strength), and the top right corner indicates to which dental material processing device the information device is connected (here: device "A"). This is particularly important in case in a dental laboratory several dental material processing devices (for example several PentaMix™ dispensers) are used. Each dental material processing device will then preferably have its own ID or individual "name". The indication of the name on the display reduces the chances of a user returning the information device to the wrong processing device.

### 2. Stopwatch Function

If in display mode ②, the user selects the "STOPWATCH" function, the display changes to mode ③. In this mode, the stopwatch function can be manually initiated by the user. In Fig. 4, a maximum time of 3:00 minutes is shown as an example. Furthermore, a watch symbol is preferably displayed in order to even more clearly indicate to the user the selected function. When the user presses "start", the countdown starts. Concurrently, the display "start" changes to "stop" so that the user can stop the stopwatch if desired. With the icon "reset", the time is reset to its initial value, i.e., 3:00 (3 minutes and zero seconds) in this example. Finally, with the cursor icon **"←",** the user can jump back to the previous display mode ②. Time periods referenced in any part of this present description can be counted up or counted down.

### 3. Dental Material Function

If the user selects "DENTAL MATERIALS" in mode ②, the display proceeds to display mode ④. In this display mode, according to the example of Fig. 4, the user can select among the different materials to be processed. Display mode ④ of Fig. 4 shows three alternatives, i.e., "USER DEFINED", "Express P Putty", or "Impregnum P Duo H S". Again, with the cursor icon "↓" the user can move the selection bar to the desired material to be selected for processing. With the cursor icon **"←",** the user can jump back to the previous display mode ②. The alternative "USER DEFINED" is highlighted in Fig. 4.

### 4. User Defined Material Settings

Display mode ⑤ shows the display of the preferred information device for the case the user selects "USER DEFINED" in mode ④. The display shows "3:00" minutes for the initial working time (symbolised in Fig. 4 by the symbol "Y" representing the mixer having two inlets and one outlet) as well as for the setting time (symbolised in Fig. 4 by the symbol that looks like a "V" and represents a tray). The user has now the option to use these initial settings or to change them with the icon "set". The display then changes to ⑤'. With the icon "enter", the user can activate each digit of the displayed times and can change it by using the curser icons "↑" or "↓" for increasing or decreasing the respective number. The selected digit is preferably blinking. Preferably, the selectable minimum time is 0:00 minutes, and the maximum time is 9:55 minutes. The available time increments for changing the times are preferably provided in steps of 5 seconds. The adjusted timings are finally confirmed with the "enter" function. Once the last digit has been changed and/or confirmed, the display jumps back to display mode ⑤.

If the user now starts the process and presses the "start" icon, the display changes to display mode ⑥. The working time (symbol "Y" in Fig. 4) countdown is initiated and the display shows the remaining time. In Fig. 4, the remaining time is "0:38" minutes, meaning zero minutes and 38 seconds. In display mode ⑥, the user can either stop the timer (using the icon "stop"), or can jump to the setting time timer (using the icon "jump"). In case a mixture of material is dispensed by the dental material processing device, the user may jump to the setting time counter before the working time counter expired if the user quickly applied the dispensed material to the mouth of the patient and does not need the complete working time. The display then jumps to mode ⑦ which displays the setting time timer (in Fig. 4 the setting timer is at "1:47" minutes, meaning 1 minute and 47 seconds). Here the user has preferably the option to stop the timer using the icon "stop" if for some reason he wants to interrupt the timer. The display then changes back to mode ⑤. On the other hand, after expiry of the setting time timer, the display switches to display mode ⑧ which display a count-up "Ω" of for example 2:00 minutes. This information indicates to the user how much time already expired since expiry of the setting time of the material. In Fig. 4, this time is "1:56" minutes. Preferably, a 2 minute count-up is provided. Finally, the display mode changes again to ②.

### 5. Stored information regarding material

As an alternative to the selection of user defined material settings, stored information regarding materials are offered to the user in display mode ④. Display mode ⑨ in Fig. 4 shows the information display if the user selects "Express P Putty". For this material, the initial working time and setting time are retrieved from a database, and each are set to 3:00 minutes. Upon pressing the "start" icon, the working time timer starts to count down (symbol "Y"). In display mode ⑥', the current time is "0:38" minutes. Again, as described above, the user can jump to the next display mode showing the setting time timer, or can stop the working time timer. In the latter case, the display changes to mode ⑨ again. On the other hand, if the user selects "jump", the setting time timer ⑦' is started (shown in Fig. 4 already at "1:47"). Preferably, this "jump" functionality is provided only if permissible dependent on the specific material to be processed and used. For example, a jump to the setting time timer is allowable for silicone based materials. With silicone based materials, the working time can be aborted once the tray with the material is in the mouth of the patient because the higher temperature in the patient's mouth almost immediately initiates setting of the material. In this setting time mode, the user can stop the timer using the "stop" icon. The display mode then changes to ②. If the setting time timer expires without interruption, the count-up "Ω" ⑧' is preferably started automatically, as described above. The count-up can be stopped, if desired by the user, using the "stop" icon. The display mode then changes to ②.

Figs. 5 shows a flow diagram explaining the communication between the dental material device and the information device for a preferred embodiment of the present invention. In this preferred embodiment, the dental material processing device is a dental material mixer and dispenser like the PentaMix™ system available from 3M ESPE AG, Seefeld, Germany.

After the dental material processing device (for example said PENTAMIX device) has been switched on ("Start"), the dental material processing device of this preferred embodiment first determines as to whether or not a transponder representing a dental material processing device name or ID is detectable (step S10), i.e., whether the dental material processing device already comprises a name transponder or whether such a name transponder is brought close to the dental material processing device or is attached to it.. This means that an individual name can at first be allocated to a particular device which is particularly useful if a dentist or dental laboratory uses several such devices. In this case, each dental material processing device can get its own name or identification in order to avoid any confusion or collision. Such name or ID is transferable to the information devices being logged in at a specific dental material processing device and is then preferably displayed (as described above with reference to Fig. 4). This helps the user in case he forgets to which dental material processing device his information device was logged in. Such transponder is preferably brought within a predetermined distance of the dental material processing device so that the name or ID carried by the transponder can be read by the device. If the dental material processing device for the first time gets a name or ID (for example, the dentist buys a second device and now needs to give them individual IDs), the transponder may preferably be permanently attachable to the device, for example with an adhesive layer. Thus, every time the processing device is switched on, the given name is read.

If such name transponder is detected in step S10, the name is read and stored in a memory of the processing device (step S11).

In the next step S12, it is determined whether an information device is logged in. If no information device is logged in, the process continues with step S20. On the other hand, in case an information device is logged in, the processing device name is sent to the information device being logged in (step S 13). The process the proceeds to step S20.

If in step 10 no transponder carrying a name or ID for the dental material processing device is detected, it is detected whether a container transponder can be detected (step S20). If no such transponder is detected, there is either no container placed in the dental material processing device, or a container without a transponder is in the device. If a container transponder is detected in step S20, the processing device reads the transponder which contains, for example, material data, and stores the read data in a memory (step S21). In the next step S22, the processing device determines whether there is an information device logged in. In the affirmative, the material data are sent to the information device (step S23).

If no container transponder is detected in step S20, the process proceeds to step S30. In this step, the dental material processing device determines whether there is an information device logged in. If the result is "yes", the dental material processing device informs the information device that there is no container placed in the processing device or that it is a container having no transponder, for example from a different dental material provider (step S31).

On the other hand, if there is no information device logged in in step S30, the dental material processing device interrogates whether there is an information device detectable (step S40). In case an information device is detected, the processing device checks in step 41 whether the detected information device is already logged in. If it is already logged in, the process proceeds to step S50. If not, the information device is logged in in step S42. Preferably, this is signalled to the user by switching on a light, e.g., a LED, on the information device. Next, in step 43, it is determined whether the material data are already stored in the dental material processing device. If such material data are already stored the data are sent to the information device (step S44). If not, the process proceeds to step S50. Furthermore, in step S45, it is checked whether a device name was initially allocated to the dental material processing device. This device name or ID is then sent to the information device (step S46).

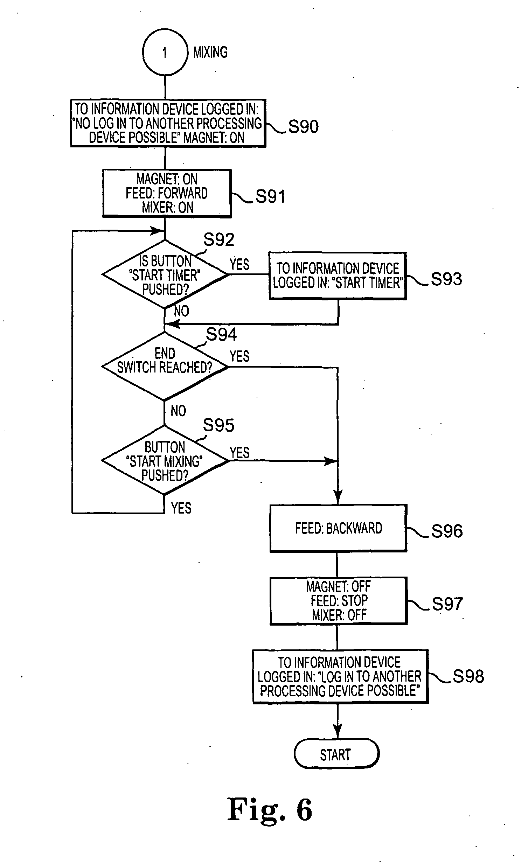

At step S50, the dental material processing device determines whether and when the processing device has begun mixing, for example whether the button "start mixing" is pushed. In step S51 it is checked whether material data are stored in the memory. In case such material data are available, the mixing parameter are read from the memory (step S52), and the mixing process starts (see Fig. 6). On the other hand, step S53, standard mixing parameters are set.

If the mixing process is not started in step S50, step S60 inquires whether the timer function is initiated, for example whether the button "start timer" is pushed at the dental material processing device. The "start timer" request is then sent to the information device being logged in (step S61).

In step S70 it is checked whether the information device left, for example it will be logged in to another dental material processing device. The information device is then logged out (step S71).

Finally, in step S80, the routine checks whether an update transponder is within range of an interrogator or reader associated with the processing device. If so, an update sub-routine is initiated (step S81).

Fig. 6 shows a flow diagram of a mixing sub-routine for the preferred embodiment of Fig. 5.

Once the mixing parameters are read from the memory (step S52) or set to "standard" (step S53), the sub-routine initiating the mixing process is started. First, in step S90, the information device being logged in to the dental material processing device is informed that a log in to another dental material processing device is not possible. In step S91, the magnet of the plunger driver is turned on, the feed is set to "FORWARD", and the mixer is set to "ON".

In step S92 it is again checked whether the timer function is initiated, for example whether the button "start timer" is pushed (S92). If yes (step S93), the message "start timer" is sent to the information device that is logged in.

In step S94 it is checked whether the end switch of the plunger is reached, meaning that the plunger has reached the end of its range. If it is reached, the routine continues with step S96, and the feed is set to "BACKWARD", the magnet is set to "OFF", the feed is set to "OFF", and the mixer is set to "OFF" (step S97). Then, the information device is informed that a log in to another information device is not possible (step S98). Finally, the routine returns to "start".

On the other hand, if the end switch is not reached in step S94, it is again checked whether the mixing process is initiated, for example whether the button "start mixing" is pushed by the user. If not, the process continues with step S96. If so, the mixing process is continued, the routine returns to step S92.

Although the present invention has been described with reference to various embodiments and sequences, other embodiments and sequences are considered to be within the scope of the following claims.

## Claims

1. System comprising a dental material processing device for processing dental material(s) contained in a container or in containers, involving at least one of mixing and dispensing, said dental material processing device comprising:
a transmitter for communication with at least one information device, and adapted to transmit data signals comprising a working time and/or a setting time associated with said processed dental material(s) to the information device, the information device being separate from said dental material processing device so that it can be moved away from the dental material processing device, wherein said dental material processing device is further adapted for reading a data carrier associated with said container(s), adapted for obtaining information associated with said dental material(s) from said data carrier;
the system further comprising
the at least one information device for use in processing dental material(s) with the dental material processing device, wherein the information device is separable from said dental material processing device so that it can be moved away from the dental material processing device and provides a working time and/or a setting time of the dental material(s) used to a user, the information device comprising:
a receiver for communication with said dental material processing device for receiving from the dental material processing device, said data signals associated with said processed dental material(s); and
an indicator for indicating visual and/or aural information to a user based on said data, and a timer, wherein said timer is adapted to intiate the measurement of a period of time by a command signal received from said dental material processing device.

2. The system of claim 1, said data carrier being an RFID tag.

3. The system of claim 1 or 2, in which the dental material processing device further comprising a receiver for receiving signals from said information device.

4. The system of any of claims 1 to 3, in which the dental material processing device further comprising a memory unit for storing data associated with said dental material(s), and/or for storing data associated with said at least one information device.

5. The system of any of claims 1 to 4, said transmitter being a wireless transmitter.

6. The system of any of the preceding claims, said timer being adapted to be initiated by a command signal input by a user.

7. The system of claim 6, said command signal initiating a first timer function in the information device with respect to the working time for the dispensed material.

8. The system of claim 6 or 7, said command signal initiating a second timer function in the information device with respect to the setting time for the dispensed material.

9. Method of communication between a dental material processing device for at least one of mixing and dispensing dental material(s) and at least one information device, being separate from said dental material processing device so that it can be moved away from the dental material processing device, which method comprises:
(a) said dental material processing device transmitting an information signal identifying said at least one information device to be contacted for activating said at least one information device;
(b) said dental material processing device further transmitting specific data associated with said processed dental material(s) to said at least one information device,
(c) said at least one information device receiving said specific data associated with said dental materials(s) from said dental material processing device
wherein said data associated with said dental material(s) includes at least one of the working time of the material(s), setting time of the material(s), and wherein the method further includes the step of transmitting a command signal for initiating a timer function from said dental material processing device to said information device being in communication with said dental material processing device, upon dispensing dental material(s) from said dental material processing device.

10. The method of claim 9, said command signal initiating a first timer function in the information device with respect to the working time for the dispensed dental material.

11. The method of claim 9 or 10, said command signal initiating a second timer function in the information device with respect to the setting time for the dispensed dental material.

## Patentansprüche

1. System mit einer Dentalmaterialverarbeitungseinrichtung zur Verarbeitung von Dentalmaterial(ien), das oder die in einem Behälter oder Behältern, mindestens zum Mischen und/oder Abgeben, enthalten ist oder sind, wobei die Dentalmaterialverarbeitungseinrichtung Folgendes aufweist:
einen Sender zur Kommunikation mit mindestens einer Informationseinrichtung, und ausgelegt zum Senden von Datensignalen, die eine Arbeitszeit und/oder eine Wartezeit aufweisen, die mit dem oder den verarbeiteten Material(ien) verbunden sind, an die Informationseinrichtung, wobei die Informationseinrichtung von der Dentalmaterialverarbeitungseinrichtung getrennt ist, derart, dass sie von der Dentalmaterialverarbeitungseinrichtung wegbewegt werden kann, wobei die Dentalmaterialverarbeitungseinrichtung ferner zum Lesen eines mit dem oder den Behälter(n) verbundenen Datenträgers ausgelegt ist, zum Erhalten von mit dem oder den Dentalmaterial(ien) verbundenen Informationen vom Datenträger ausgelegt ist;
wobei das System ferner Folgendes aufweist
die mindestens eine Informationseinrichtung zur Verwendung bei der Verarbeitung von Dentalmaterial(ien) mit der Dentalmaterialverarbeitungseinrichtung, wobei die Informationseinrichtung von der Dentalmaterialverarbeitungseinrichtung getrennt ist, derart, dass sie von der Dentalmaterialverarbeitungseinrichtung wegbewegt werden kann, und für einen Benutzer eine Arbeitszeit und/oder eine Wartezeit von dem oder den verwendeten Dentalmaterial(ien) bereitstellt, wobei die Informationseinrichtung Folgendes aufweist:
einen Empfänger zur Kommunikation mit der Dentalmaterialverarbeitungseinrichtung zum Empfangen von Datensignalen, die mit dem oder den verarbeiteten Dentalmaterial(ien) verbunden sind, von der Dentalmaterialverarbeitungseinrichtung; und
eine Anzeige zum Anzeigen visueller und/oder hörbarer Informationen an einen Benutzer aufgrund der Daten,
und
einen Zeitgeber, wobei der Zeitgeber dazu ausgelegt ist, die Messung einer Zeitdauer durch ein von der Dentalmaterialverarbeitungseinrichtung empfangenes Befehlssignal zu initiieren.

2. System nach Anspruch 1, wobei der Datenträger ein RFID-Tag ist.

3. System nach Anspruch 1 oder 2, bei dem die Dentalmaterialverarbeitungseinrichtung ferner einen Empfänger zum Empfangen von Signalen von der Informationseinrichtung aufweist.

4. System nach einem der Ansprüche 1 bis 3, bei dem die Dentalmaterialverarbeitungseinrichtung ferner eine Speichereinheit zum Speichern von mit dem oder den Dentalmaterial(ien) verbundenen Daten und/oder zum Speichern von mit der mindestens einen Informationseinrichtung verbundenen Daten aufweist.

5. System nach einem der Ansprüche 1 bis 4, wobei der Sender ein drahtloser Sender ist.

6. System nach einem der vorhergehenden Ansprüche,
wobei der Zeitgeber dazu ausgelegt ist, durch ein von einem Benutzer eingegebenes Befehlssignal initiiert zu werden.

7. System nach Anspruch 6, wobei das Befehlssignal eine erste Zeitgeberfunktion in der Informationseinrichtung in Bezug auf die Arbeitszeit für das abgegebene Material initiiert.

8. System nach Anspruch 6 oder 7, wobei das Befehlssignal eine zweite Zeitgeberfunktion in der Informationseinrichtung in Bezug auf die Wartezeit für das abgegebene Material initiiert.

9. Verfahren zur Kommunikation zwischen einer Dentalmaterialverarbeitungseinrichtung zum Mischen und/oder Abgeben von Dentalmaterial(ien) und mindestens einer Informationseinrichtung, die von der Dentalmaterialverarbeitungseinrichtung getrennt ist, derart, dass sie von der Dentalmaterialverarbeitungseinrichtung wegbewegt werden kann, wobei das Verfahren Folgendes aufweist:
(a) die Dentalmaterialverarbeitungseinrichtung sendet ein Informationssignal, das die mindestens eine Informationseinrichtung identifiziert, die zum Aktivieren der mindestens einen Informationseinrichtung zu kontaktieren ist;
(b) die Dentalmaterialverarbeitungseinrichtung sendet ferner spezielle mit dem oder den verarbeiteten Dentalmaterial(ien) verbundene Daten an die mindestens eine Informationseinrichtung,
(c) die mindestens eine Informationseinrichtung empfängt die speziellen mit dem oder den Dentalmaterial(ien) verbundenen Daten von der Dentalmaterialverarbeitungseinrichtung,
wobei die mit dem oder den Dentalmaterial(ien) verbundenen Daten die Arbeitszeit des Materials oder der Materialien und/oder die Wartezeit des Materials oder der Materialien aufweist,
und wobei das Verfahren ferner den Schritt des Sendens eines Befehlssignals zur Initiierung einer Zeitgeberfunktion von der Dentalmaterialverarbeitungseinrichtung an die mit der Dentalmaterialverarbeitungseinrichtung kommunizierende Informationseinrichtung aufweist, wenn das Dentalmaterial oder die Dentalmaterialien aus der Dentalmaterialverarbeitungseinrichtung abgegeben wird/werden.

10. Verfahren nach Anspruch 9, wobei das Befehlssignal eine erste Zeitgeberfunktion in der Informationseinrichtung in Bezug auf die Arbeitszeit für das abgegebene Dentalmaterial initiiert.

11. Verfahren nach Anspruch 9 oder 10, wobei das Befehlssignal eine zweite Zeitgeberfunktion in der Informationseinrichtung in Bezug auf die Wartezeit für das abgegebene Dentalmaterial initiiert.

## Revendications

1. Système comprenant un dispositif de traitement de matériaux dentaires qui traite un ou plusieurs matériaux dentaires contenus dans un récipient ou dans plusieurs récipients, en recourant aux actions qui consistent à mélanger et/ou à distribuer, ledit dispositif de traitement de matériaux dentaires comprenant :
un émetteur qui communique avec au moins un dispositif d'information et qui est conçu pour envoyer au dispositif d'information des signaux de données comprenant une durée de travail et/ou une durée de durcissement associés audit ou auxdits matériaux dentaires traités, le dispositif d'information étant séparé dudit dispositif de traitement de matériaux dentaires de manière à pouvoir être éloigné du dispositif de traitement de matériaux dentaires,
ledit dispositif de traitement de matériaux dentaires étant de plus conçu pour lire un support de données associé audit ou auxdits récipients et conçu pour que l'on puisse obtenir dudit support de données une information associée audit ou auxdits matériaux dentaires,
le système comprenant de plus le ou les dispositifs d'information à utiliser dans le traitement du ou des matériaux dentaires avec le dispositif de traitement de matériaux dentaires,
le dispositif d'information étant séparé dudit dispositif de traitement de matériaux dentaires de manière à pouvoir être éloigné du dispositif de traitement de matériaux dentaires et indiquant à un utilisateur une durée de travail et/ou une durée de durcissement du ou des matériaux dentaires, le dispositif d'information comprenant :
un récepteur qui communique avec ledit dispositif de traitement de matériaux dentaires pour recevoir du dispositif de traitement de matériaux dentaires lesdits signaux de données associés audit ou auxdits matériaux dentaires traités et
un indicateur qui délivre une information visuelle et/ou auditive à un utilisateur sur la base desdites données et
un chronomètre, ledit chronomètre étant conçu pour commencer à mesurer une durée en fonction d'un signal de commande provenant dudit dispositif de traitement de matériaux dentaires.

2. Système selon la revendication 1, dans lequel ledit support de données est une étiquette RFID.

3. Système selon les revendications 1 ou 2, dans lequel le dispositif de traitement de matériaux dentaires comprend de plus un récepteur qui reçoit des signaux provenant dudit dispositif d'information.

4. Système selon l'une quelconque des revendications 1 à 3, dans lequel le dispositif de traitement de matériaux dentaires comprend de plus une unité de mémoire qui conserve des données associées audit ou auxdits matériaux dentaires et/ou qui enregistre les données associées audit ou auxdits dispositifs d'information.

5. Système selon l'une quelconque des revendications 1 à 4, dans lequel ledit émetteur est un émetteur sans fil.

6. Système selon l'une quelconque des revendications précédentes, dans lequel ledit chronomètre est conçu pour être lancé par un signal de commande introduit par un utilisateur.

7. Système selon la revendication 6, dans lequel ledit signal de commande lance dans le dispositif d'information une première fonction de chronométrage de la durée de travail sur le matériau distribué.

8. Système selon les revendications 6 ou 7, dans lequel ledit signal de commande lance dans le dispositif d'information une deuxième fonction de chronométrage de la durée de durcissement du matériau distribué.

9. Procédé de communication entre un dispositif de traitement de matériaux dentaires qui mélange et/ou distribue un ou plusieurs matériaux dentaires et au moins un dispositif d'information étant séparé dudit dispositif de traitement de matériaux dentaires de manière à pouvoir être éloigné du dispositif de traitement de matériaux dentaires, le procédé comprenant les étapes qui consistent à :
(a) faire transmettre par ledit dispositif de traitement de matériaux dentaires un signal d'information qui identifie ledit ou lesdits dispositifs d'information qui doivent être contactés pour activer ledit ou lesdits dispositifs d'informations,
(b) faire de plus transmettre par ledit dispositif de traitement de matériaux dentaires audit ou auxdits dispositifs d'informations des données spécifiques associées audit ou auxdits matériaux dentaires traités,
(c) faire recevoir par ledit ou lesdits dispositifs d'information dudit dispositif de traitement de matériaux dentaires lesdites données spécifiques associées audit ou auxdits matériaux dentaires,
lesdites données associées audit ou auxdits matériaux dentaires comprenant la durée de travail sur le ou les matériaux et/ou la durée de durcissement du ou des matériaux,
le procédé comprenant de plus l'étape qui consiste à faire envoyer par ledit dispositif de traitement de matériaux dentaires audit dispositif d'information qui est en communication avec ledit dispositif de traitement de matériaux dentaires un signal de commande qui lance une fonction de chronométrage lors de la distribution du ou des matériaux dentaires depuis ledit dispositif de traitement de matériaux dentaires.

10. Procédé selon la revendication 9, dans lequel ledit signal de commande lance dans le dispositif d'information une première fonction de chronométrage de la durée de travail sur le matériau dentaire distribué.

11. Procédé selon la revendication 9 ou 10, dans lequel ledit signal de commande lance dans le dispositif d'information une deuxième fonction de chronométrage de la durée de durcissement du matériau dentaire distribué.
